# EUROPEAN PATENT SPECIFICATION

(11) **EP 2 554 428 B1**
(45) Date of publication and mention of the grant of the patent: **13.05.2015**
(21) Application number: 12175965.8
(22) Date of filing: 11.07.2012
(51) Int. Cl.: B60M 1/26

(54) **Tensioning device for the tension of a catenary**
Spannvorrichtung für das Spannen einer Oberleitung
Dispositif de mise en tension de la tension d'une caténaire

(30) Priority: 05.08.2011 IT BS20110047 U
(43) Date of publication of application: 06.02.2013
(73) Proprietor: Bonomi Eugenio S.p.A., 25018 Montichiari (Brescia) (IT)
(72) Inventor: Bonomi, Uberto, I-25018 Montichiari, BRESCIA (IT)
(74) Representative: Chimini, Francesco

(56) References cited:
- DE-A1- 2 712 002
- DE-A1-102008 034 713
- FR-A- 1 008 012
- FR-A1- 2 597 040

## Description

The present invention relates to a tensioning device for the tension of a catenary, in particular of railway lines, undergrounds and trolleybuses.

A tensioning device according to the preamble of claim 1 is known from FR 2 597 040.

In the railway sector, and in general in transport, the means of transport are powered with electricity by means of catenaries, that is to say networks of electric supply cables suspended at the ends by dedicated support poles.

The means of transport pick up the power supply from said electric cables by means of contact, for example by the interposition of pantographs.

The electric cables must therefore be subjected to traction, that is taut, so as to be able to receive in abutment the pantographs, ensuring constant contact with the same and thereby the powering of the means of transport, even at high speed.

Some tension devices of the catenaries exist in the art.

For example, it is known of to use a hydraulic actuator provided with a relative control panel which continuously monitors the state of the catenary and acts, hydraulically, on the traction of the catenary to offset inevitable elongations thereof caused by wear but also by differences in ambient temperature. Said actuator has the advantage of occupying a very limited space and permitting extremely precise regulation of the pull on the catenary, as well as the possibility of continually monitoring its state of tension, promptly signalling any anomalies.

However such devices are sophisticated and expensive to produce and service and have therefore had a scarce diffusion.

Mechanical devices are also known of which envisage the use of counter weights, connected to steel wires, which wind onto special pulleys operatively connected to the anchorages of the catenary.

Said anchorages are thereby pulled by the steel wires thanks to the counterweights, and the pulleys act so as to multiply the pull of the counterweights.

Such devices, while not being maintenance free, have a lower production and maintenance cost than the hydraulic actuator devices.

Despite this, the known pulley and counterweight devices have several drawbacks.

In particular, said devices occupy considerable space given that they have cantilever arms which extend significantly, used to support the pulley systems and anchorages of the electricity line.

Such dimensions often constitute limitations for example for application in enclosed environments, such as tunnels.

Moreover, the known pulley devices also lack control and monitoring devices of the state of tension of the electricity line: they are therefore unable to warn the line provider of dangerous elongations of the electricity line which could foretell breakage of the same and in any case malfunctioning of the tension device but above all, in the case of breakage of the steel cable of the counter weights, would be unable to block the consequent release of the catenary.

The purpose of the present invention is to overcome the drawbacks spoken of with reference to the prior art.

Such drawbacks and limitations are resolved by a device according to claim 1.

Other embodiments of the device according to the invention, are described in the following claims.

Further characteristics and advantages of the present invention will be more clearly comprehensible from the description given below of its preferred and non-limiting embodiments, wherein:

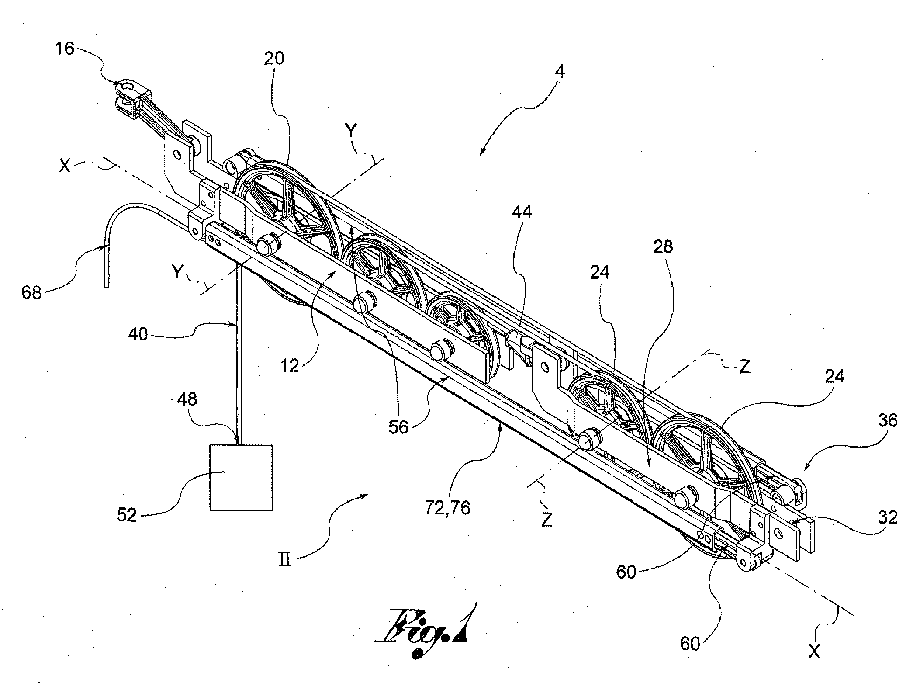

Figure 1 shows a perspective view of a device according to the present invention;

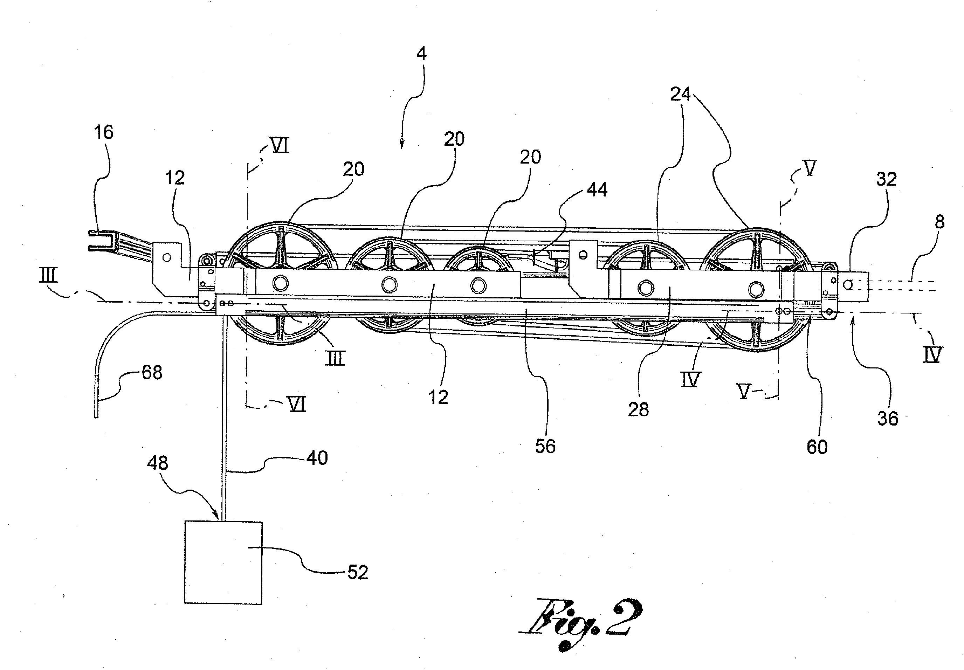

Figure 2 shows a side view of the device in figure 1, from the side of the arrow II in figure 1;

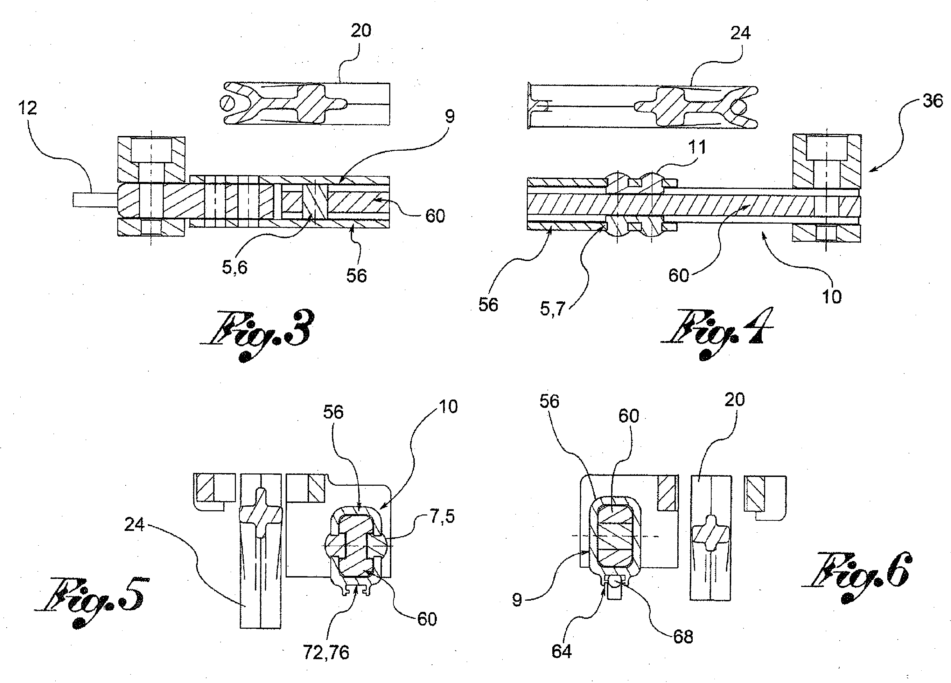

Figure 3 shows a cross-section view of the device in figure 1, along the section line III-III in figure 2;
Figure 4 shows a cross-section view of the device in figure 1, along the section line IV-IV in figure 2;
Figure 5 shows a cross-section view of the device in figure 1, along the section line V-V in figure 2;
Figure 6 shows a cross-section view of the device in figure 1, along the section line VI-VI in figure 2;

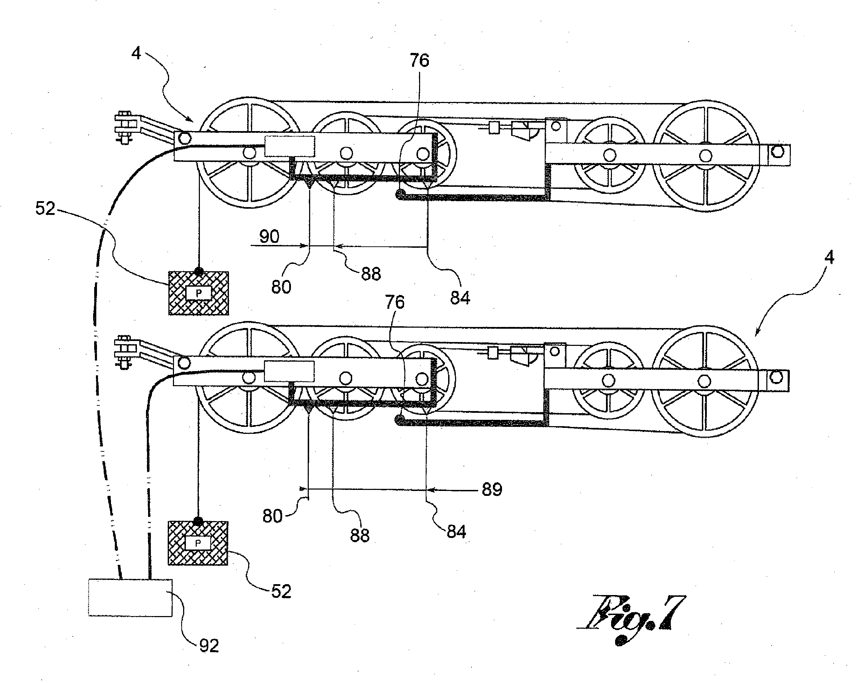

Figure 7 shows side views of the device according to the present invention, wherein some components have been left out so as to enable the viewing of some internal elements.

The elements or parts of elements common to the embodiments described below will be indicated using the same reference numerals.

With reference to the aforementioned figures, reference numeral 4 globally denotes a device for the tension of a catenary, fitted with a telescopic safety block 5, in particular for electric cables 8 of railway lines, undergrounds and trolleybuses.

The tensioning device 4 with telescopic safety block 5 comprises at least one crosspiece 12 extending in a main direction X-X, fitted with connection means 16 to an associable support structure (not shown) for the support of the device 4.

The support structure may be for example a post or pylon.

At least one fixed pulley 20 is joined to the crosspiece 12, having a rotation axis Y-Y fixed in relation to said main direction X-X and at least one mobile pulley 24.

The mobile pulley 24 is joined to a mobile carriage 28 parallel to the main direction X-X; in other words, the rotation axis Z-Z of the mobile pulley 28 moves parallel to said main direction X-X.

The mobile carriage 28 is mechanically connected to an anchorage 32 for the electric cable 8 of a railway line to be kept taut. Preferably, said anchorage 32 for the electric cable 8 is made directly on the mobile carriage 28 at an axial end 36 opposite said fixed pulley 20, in relation to the main direction X-X.

The tensioning device 4 with telescopic safety block 5 comprises at least one wire 40 connected, at a first end 44, to said mobile carriage 24 and, at a second end 48, to a counter weight 52 to ensure the tension of the electric cable 8 of the railway line.

The wire 40 is at least partially wound around said fixed pulley 20 and said mobile pulley 24, in the known manner, so that the pulleys can multiply the pull of the counterweight 52.

Preferably, the tensioning device 4 with telescopic safety block 5 comprises at least two fixed pulleys 20, joined to the crosspiece 12 and aligned in the main direction X-X, and at least two mobile pulleys 24, joined to the same mobile carriage 28 and aligned in the main direction X-X, the fixed 20 and mobile 24 pulleys co-operating with each other so as to multiply the pull of the counterweight 52.

According to one embodiment, the tensioning device 4 with telescopic safety block 5 comprises at least one longitudinal member 56, extending parallel to said main direction X-X, the longitudinal member 56 being mechanically attached to said crosspiece 12. Moreover, the mobile carriage 28 is mechanically connected to at least one support stem 60, also positioned parallel to the main direction X-X.

According to one embodiment, the longitudinal member 56 is hollow so as to telescopically house and guide the support stem 60, parallel to said main direction X-X; in other words, the support stem 60 is housed at least partially inside the longitudinal member 56 inside which it is guided in a translation movement parallel to the main direction X-X, depending on the pull of the electric cable 8.

Preferably, the longitudinal member 56 and the support stem 60 are counter-shaped so as to form a kinematic coupling of a prismatic type, along said main direction X-X.

Prismatic type coupling is taken to mean a coupling of pure relative translation, in the case in point, parallel to said main direction X-X, without a rotation around said main direction X-X being permitted.

Preferably, the longitudinal member 56 is attached to the crosspiece 12 at the point of the connection means 16 to the associable support structure and the support stem 60 is attached to the mobile carriage 28 at the point of anchorage for the electric cable 8.

As seen, the tensioning device 4 according to the present invention comprises a telescopic safety block 5 suitable to form a block or limit stop to the extraction of the support stem 60 from the relative longitudinal member 56.

Such telescopic limit stop function is particularly advantageous in the case of breakage of the wire 40 of the counter weight 52 with consequent extraction or exit of the support stem 60 from the relative longitudinal member 56. Consequently, thanks to the telescopic safety block 5, the total extraction of the support stem 60 from the relative longitudinal member 56 and thereby the consequent release of the catenary is prevented.

According to one embodiment, the telescopic safety block 5 comprises a shoulder 6 joined to the support stem 60 and suitable for forming an undercut in relation to a corresponding catch 7 made in said longitudinal member 56. For example, the shoulder 6 is positioned at an entrance end 9 of the support stem 60, facing the fixed pulley 20, while the catch 7 is positioned near an exit end 10 of the longitudinal member 56, facing the mobile pulley 24. For example, the catch 7 may comprise at least one pin 11.

According to a preferred embodiment, the tensioning device with telescopic safety block 4 comprises a pair of longitudinal members 56 and a pair of support stems 60, positioned on opposite sides to the pulleys 20, 24, in a transversal direction parallel to the rotation axes Y-Y, Z-Z of said pulleys 20, 24, each longitudinal member 56 housing and guiding a respective support stem 60.

Each of the longitudinal members 56 is mechanically connected to the crosspiece 12, while each of the support stems 60 is mechanically connected to said mobile carriage 28.

According to one embodiment, at least one longitudinal member 56 defines a seat 64 for the housing of a cable 68 supplying power to control means 72 of the functioning of the tensioning device with telescopic safety block 4, as described further below.

According to one embodiment, at least one position sensor 76 is positioned inside a longitudinal member 56 suitable for detecting the reciprocal position between the support stem 60 and the respective longitudinal member 56 to measure the tensional value of the electric cable 8.

For example, the position sensor 76 is calibrated so as to identify a first and second limit stop 80, 84 of the support stem 60 and, thereby, of the electric cable 8. For example, the first limit stop 80 identifies the maximum insertion 80 of the support stem 60 inside the longitudinal member 56, corresponding to a possible breakage of the electric cable 8: In fact, an excessive movement of the anchorage 32 towards the crosspiece 12 entails an over-tightening of the electric cable 8 or, more frequently, breakage of the same, with consequent pack closure of the support stem 60 in the relative longitudinal member 56, as a result of the pull of the counterweight 52.

The second limit stop 84 identifies the maximum extraction of the support stem 60 from the longitudinal member 56, corresponding to possible breakage of the wire 40 of the counterweight 52: in fact, an excessive extraction of the support stem 60 from the longitudinal member 56 tendentially occurs following breakage of the wire 40 of the counterweight 52. In such case, in fact, the weight of the electric cable 8 itself and, in addition, the thrust exerted by the same on the means of locomotion in transit on the railway line, no longer being contrasted by the counterweight 52, cause an excessive slackening of said electric cable.

Preferably, the position sensor 76 identifies an intermediate point 88 between the limit stops, so as to signal in advance possible anomalous lengthening of the electric cable 8and thereby prevent any breakages of the electric cable 8 or of the wire 40.

On the whole, the distance between said first and second limit stop 80, 84 defines the useful stroke 89 of the device 4. Moreover, the crossing of the preestablished intermediate point 88, defines a stroke of potential risk of breakage 90 of the electric cable 8.

Preferably, the device 4 houses at least one temperature sensor to measure the temperature of the electric cable 8.

According to one embodiment, said control means 72 comprise at least one control unit 92 of the device 4, which is operatively connected to said position sensors 76 so as to process the data received from the same and promptly send alarm signals.

Preferably, the control unit 92 is also operatively connected to the temperature sensor so as to processes the signals received from the position sensor 76 as a function of the possible thermal lengthening of the electric cable 8 from its nominal value.

As may be seen from the description, the device according to the invention makes it possible to overcome the drawbacks presented of the prior art.

Advantageously, the device is cheap to install and service.

The device occupies limited space compared to the solutions of the prior art.

In fact, the limit stop positions occupy less space given that over half of the support stem is always contained inside the respective longitudinal member 56.

Consequently, the telescopic device of the present invention has smaller dimensions of the portions overhanging the support structure and can be easily used in relatively restricted spaces, such as for example in tunnels.

Moreover, the device according to the present invention is safer than those of the prior art given that in the case of breakage of the steel wire of the counterweights it is in any case able to block the resulting release of the catenary.

Moreover, the device makes it possible to place, inside the longitudinal members, appropriate monitoring devices of the real extension of the electric cable, so as to prevent any breakage of the same.

The positioning of said monitoring devices in a safe position ensures their reliability and duration and prevents the risk of false signalling of anomalies.

A person skilled in the art may make numerous modifications and variations to the devices described above so as to satisfy contingent and specific requirements, while remaining within the scope of protection of the invention as defined by the following claims.

## Claims

1. Tensioning device (4) for the tension of a catenary, in particular for electric cables (8) of railway lines, undergrounds and trolleybuses, comprising
- at least one crosspiece (12) extending along a main direction (X-X), fitted with connection means (16) to an associable support structure, to support the device (4),
- at least one fixed pulley (20) being joined to the crosspiece (12), having a rotation axis fixed in relation to said main direction (X-X),
- at least one mobile pulley (24), said mobile pulley (24) being joined to a mobile carriage (28) parallel to the main direction (X-X); the rotation axis of the mobile pulley (24) moving parallel to said main direction (X-X),
- the mobile carriage (28) being mechanically connected to an anchorage (32) for the electric cable (8) of a railway line to be kept taut,
- at least one wire (40) connected, at a first end (44), to said mobile carriage (28) and, at a second end (48), to a counterweight (52) to ensure the tension of the electric cable (8) of the railway line,
- the wire (40) being at least partially wound around said fixed pulley (20) and said mobile pulley (24), **characterised by** the fact that
- the tensioning device (4) comprises at least one longitudinal member (56), extending parallel to said main direction (X-X), the longitudinal member (56) being mechanically attached to said crosspiece (12),
- the mobile carriage (28) is mechanically connected to at least one support stem (60),
- wherein the device (4) comprises at least one position sensor (76), suitable to detect the relative position between the support stem (60) and the longitudinal member (56) to measure the tensional value of the electric cable (8).

2. Tensioning device (4) according to claim 1, wherein said at least one position sensor (76) is positioned inside the longitudinal member (56).

3. Tensioning device (4) according to claim 1 or 2, wherein said position sensor (76) is calibrated so as to identify a first and second limit stop (80, 84) of the support stem (60) and, thereby, of the electric cable (8), the first limit stop (80) identifying the maximum insertion of the support stem (60) inside the longitudinal member (56), corresponding to a possible breakage of the electric cable (8), the second limit stop (84) identifying the maximum extraction of the support stem (60) from the longitudinal member (56), corresponding to possible breakage of the wire (40) of the counterweight (52).

4. Tensioning device (4) according to claim 1, 2 or 3, wherein the position sensor (76) identifies an intermediate point (80, 84) between the limit stops, so as to signal in advance possible anomalous lengthening of the electric cable (8).

5. Tensioning device (4) according to any of the previous claims, wherein said device (4) houses at least one temperature sensor to measure the temperature of the electric cable (8).

6. Tensioning device (4) according to any of the previous claims, comprising at least one control unit (92) of the device (4), said control unit (92) being operatively connected to said position sensors (76) so as to process the data and promptly send alarm signals.

7. Tensioning device (4) according to claims 5 and 6, wherein said control unit (92) processes the signals received from the position sensor (76) as a function of the possible thermal lengthening of the electric cable (8) from its nominal value.

8. Tensioning device (4) according to any of the previous claims, wherein the longitudinal member (56) is hollow so as to telescopically house and guide said support stem (60) parallel to said main direction (X-X) and wherein the device (4) comprises a telescopic safety block (5) suitable to form a block or limit stop to the extraction of the support stem (60) from the relative longitudinal member (56).

9. Tensioning device (4) according to claim 8, wherein the telescopic safety block (5) comprises a shoulder (6) joined to the support stem (60) and suitable to form an undercut in relation to a corresponding catch (7) made in said longitudinal member (56).

10. Tensioning device (4) according to claim 9, wherein the shoulder (6) is positioned at an entrance end (9) of the support stem (60), facing the fixed pulley (20) while the catch (7) is positioned near an exit end (10) of the longitudinal member (56), facing the mobile pulley (24).

11. Tensioning device (4) according to any of the previous claims, wherein said anchorage (32) for the electric cable (8) is made directly on the mobile carriage (28) at an axial end (36) opposite said fixed pulley (20), in relation to the main direction (X-X).

12. Tensioning device (4) according to any of the previous claims, wherein the longitudinal member (56) is attached to the crosspiece (12) at the point of the connection means (16) to the associable support structure and the support stem (60) is attached to the mobile carriage (28) at the point of anchorage (32) for the electric cable (8).

13. Tensioning device (4) according to any of the previous claims, comprising a pair of longitudinal members (56) and a pair of support stems (60), positioned on opposite sides to the pulleys (20, 24), in a transversal direction parallel to the rotation axes (Y-Y, Z-Z) of said pulleys (20, 24), each longitudinal member (56) housing and guiding a respective support stem (60).

14. Tensioning device (4) according to any of the previous claims, wherein the device (4) comprises at least two fixed pulleys (20), joined to the crosspiece (12) and aligned in the main direction (X-X), and at least two mobile pulleys (24), joined to the same mobile carriage (28) and aligned in the main direction (X-X), the fixed (20) and mobile (24) pulleys co-operating with each other so as to multiply the pull of the counterweight (52).

15. Tensioning device (4) according to any of the previous claims, wherein the longitudinal member (56) defines a seat (64) for housing a cable (68) supplying power to control means (72) of the functioning of the telescopic device (4).

## Patentansprüche

1. Spannvorrichtung (4) für das Spannen einer Oberleitung, insbesondere für elektrische Kabel (8) von Eisenbahnlinien, Untergrundbahnen und Oberleitungsbussen, die umfasst:
- wenigstens ein Querstück (12), das sich entlang einer Hauptrichtung (X-X) erstreckt, das mit Verbindungsmitteln (16) ausgestattet ist, die mit einer Haltestruktur verbindbar sind, um die Vorrichtung (4) zu halten,
- wenigstens eine feste Seilscheibe (20), die mit dem Querstück (12) verbunden ist, die eine Drehachse in Bezug auf die Hauptrichtung (X-X) fixiert hat,
- wenigstens eine bewegliche Seilscheibe (24), wobei die bewegliche Seilscheibe (24) mit einem beweglichen Schlitten (28) parallel zu der Hauptrichtung (X-X) verbunden ist; wobei die Drehachse der beweglichen Seilscheibe (24) sich parallel zu der Hauptrichtung (X-X) bewegt,
- wobei der bewegliche Schlitten (28) mechanisch mit einer Verankerung (32) verbunden ist, damit das elektrische Kabel (8) einer Eisenbahnlinie straff gehalten werden kann,
- wenigstens ein Seil (40), das an einem ersten Ende (44) mit dem beweglichen Schlitten (28) verbunden ist und an einem zweiten Ende (48) mit einem Gegengewicht (52) verbunden ist, um die Spannung des elektrischen Kabels (8) der Eisenbahnlinie sicher zu stellen,
- wobei das Seil (40) wenigstens teilweise um die feste Seilscheibe (20) und die bewegliche Seilscheibe (24) gewickelt ist,
**gekennzeichnet durch** die Tatsache, dass
- die Spannvorrichtung (4) wenigstens ein Längselement (56) umfasst, das sich parallel zu der Hauptrichtung (X-X) erstreckt, wobei das Längselement (56) mechanisch an dem Querstück (12) befestigt ist,
- wobei der bewegliche Schlitten (28) mechanisch mit wenigstens einem Halteschaft (60) verbunden ist,
- wobei die Vorrichtung (4) wenigstens einen Positionssensor (76) umfasst, der geeignet ist, um die relative Position zwischen dem Halteschaft (60) und dem Längselement (56) zu erfassen, um den Spannwert des elektrischen Kabels (8) zu messen.

2. Spannvorrichtung (4) nach Anspruch 1, wobei der wenigstens eine Positionssensor (76) im Inneren des Längselements (56) positioniert ist.

3. Spannvorrichtung (4) nach Anspruch 1 oder 2, wobei der Positionssensor (76) geeicht ist, um einen ersten und zweiten Grenzanschlag (80, 84) des Halteschafts (60) und dadurch des elektrischen Kabels (8) zu bestimmen, wobei der erste Grenzanschlag (80) den maximalen Einsatz des Halteschafts (60) im Inneren des Längselements (56), der einem möglichen Reißen des elektrischen Kabels (8) entspricht, bestimmt, wobei der zweite Grenzanschlag (84) das maximale Herausziehen des Halteschafts (60) aus dem Längselement (56), das dem möglichen Reißen des Seils (40) des Gegengewichts (52) entspricht, bestimmt.

4. Spannvorrichtung (4) nach Anspruch 1, 2 oder 3, wobei der Positionssensor (76) einen Zwischenpunkt (80, 84) zwischen den Grenzanschlägen bestimmt, um im Voraus ein mögliches unnormales Verlängern des elektrischen Kabels (8) zu signalisieren.

5. Spannvorrichtung (4) nach einem der vorhergehenden Ansprüche, wobei die Vorrichtung (4) wenigstens einen Temperatursensor aufnimmt, um die Temperatur des elektrischen Kabels (8) zu messen.

6. Spannvorrichtung (4) nach einem der vorhergehenden Ansprüche, die wenigstens eine Steuereinheit (92) der Vorrichtung (4) umfasst, wobei die Steuereinheit (92) betriebsfähig mit den Positionssensoren (76) verbunden ist, um die Daten zu verarbeiten und unverzüglich Alarmsignale zu senden.

7. Spannvorrichtung (4) nach einem der Ansprüche 5 und 6, wobei die Steuereinheit (92) die Signale verarbeitet, die von dem Positionssensor (76) als eine Funktion der möglichen thermischen Verlängerung des elektrischen Kabels (8) gegenüber seinem Nennwert empfangen werden.

8. Spannvorrichtung (4) nach einem der vorangehenden Ansprüche, wobei das Längselement (56) hohl ist, um den Halteschaft (60) teleskopisch aufzunehmen und parallel zu der Hauptrichtung (X-X) zu führen, und wobei die Vorrichtung (4) einen teleskopischen Sicherheitsblock (5) umfasst, der geeignet ist, einen Block oder Grenzanschlag für das Herausziehen des Halteschafts (60) aus dem zugehörigen Längselement (56) zu bilden.

9. Spannvorrichtung (4) nach Anspruch 8, wobei der teleskopische Sicherheitsblock (5) einen Absatz (6) umfasst, der mit dem Halteschaft (60) verbunden ist und geeignet ist, eine Unterschneidung in Bezug auf eine in dem Längselement (56) hergestellte Arretierung (7) zu bilden.

10. Spannvorrichtung (4) nach Anspruch 9, wobei der Absatz (6) an einem Eingangsende (9) des Halteschafts (60) positioniert ist, der der festen Seilscheibe (20) zugewandt ist, während die Arretierung (7) nahe einem Austrittsende (10) des Längselements (56), das der beweglichen Seilscheibe (24) zugewandt ist, positioniert ist.

11. Spannvorrichtung (4) nach einem der vorangehenden Ansprüche, wobei die Verankerung (32) für das elektrische Kabel (8) direkt auf dem beweglichen Schlitten (28) an einem axialen Ende (36) entgegengesetzt zu der festen Seilscheibe (20) in Bezug auf die Hauptrichtung (X-X) hergestellt ist.

12. Spannvorrichtung (4) nach einem der vorangehenden Ansprüche, wobei das Längselement (56) an dem Querstück (12) an dem Punkt der Verbindungsmittel (16) mit der verbindbaren Haltestruktur befestigt ist, und der Halteschaft (60) an dem beweglichen Schlitten (28) an dem Verankerungspunkt (32) für das elektrische Kabel (8) befestigt ist.

13. Spannvorrichtung (4) nach einem der vorangehenden Ansprüche, die ein Paar von Längselementen (56) und ein Paar von Halteschäften (60) umfasst, die in einer Querrichtung parallel zu den Drehachsen (Y-Y, Z-Z) der Seilscheiben (20, 24) auf entgegengesetzten Seiten der Seilscheiben (20, 24) positioniert sind, wobei jedes Längselement (56) einen jeweiligen Halteschaft (60) aufnimmt und führt.

14. Spannvorrichtung (4) nach einem der vorangehenden Ansprüche, wobei die Vorrichtung (4) wenigstens zwei feste Seilscheiben (20), die mit dem Querstück (12) verbunden und mit der Hauptrichtung (X-X) ausgerichtet sind, und wenigstens zwei bewegliche Seilscheiben (24), die mit dem gleichen beweglichen Schlitten (28) verbunden und in der Hauptrichtung (X-X) ausgerichtet sind, umfasst, wobei die festen (20) und beweglichen (24) Seilscheiben miteinander zusammenwirken, um den Zug des Gegengewichts (52) zu vervielfachen.

15. Spannvorrichtung (4) nach einem der vorangehenden Ansprüche, wobei das Längselement (56) ein Auflager (64) zum Aufnehmen eines Kabels (68) definiert, das Leistung an das Steuermittel (72) der Funktion der teleskopischen Vorrichtung (4) liefert.

## Revendications

1. Dispositif tendeur (4) pour la tension mécanique d'une caténaire, en particulier pour les câbles électriques (8) des voies ferrées, métros et trolleybus, comprenant
- au moins une traverse (12) orientée selon une direction principale (X-X), équipée de moyens de liaison (16) avec une structure porteuse associable, pour soutenir le dispositif (4),
- au moins une poulie fixe (20) fixée à la traverse (12), possédant un axe de rotation fixe par rapport à ladite direction principale (X-X),
- au moins une poulie mobile (24), ladite poulie mobile (24) étant fixée à un chariot mobile (28) parallèle à la direction principale (X-X), l'axe de rotation de la poulie mobile (24) se déplaçant parallèlement à ladite direction principale (X-X),
- le chariot mobile (28) étant mécaniquement relié à un ancrage (32) pour le câble électrique (8) d'une voie ferrée à maintenir tendu,
- au moins un câble (40) relié, à une première extrémité (44), audit chariot mobile (28) et, à une deuxième extrémité (48), à un contrepoids (52) pour garantir la tension mécanique du câble électrique (8) de la voie ferrée,
- le câble (40) étant au moins partiellement enroulé autour de ladite poulie fixe (20) et de ladite poulie mobile (24),
**caractérisé en ce que**
- le dispositif tendeur (4) comprend au moins un élément longitudinal (56), orienté parallèlement à ladite direction principale (X-X), l'élément longitudinal (56) étant mécaniquement fixé à ladite traverse (12),
- le chariot mobile (28) est relié mécaniquement à au moins une tige d'appui (60),
- dans lequel le dispositif (4) comprend au moins un capteur de position (76), adapté pour détecter la position relative entre la tige d'appui (60) et l'élément longitudinal (56) pour mesurer la valeur de la tension mécanique du câble électrique (8).

2. Dispositif tendeur (4) selon la revendication 1, dans lequel ledit au moins un capteur de position (76) est installé à l'intérieur de l'élément longitudinal (56).

3. Dispositif tendeur (4) selon la revendication 1 ou 2, dans lequel ledit capteur de position (76) est calibré de manière à identifier une première et une deuxième butée (80, 84) de la tige d'appui (60) et, ainsi, du câble électrique (8), la première butée (80) identifiant l'insertion maximale de la tige d'appui (60) à l'intérieur de l'élément longitudinal (56), correspondant à une possible rupture du câble électrique (8), la deuxième butée (84) identifiant la sortie maximale de la tige d'appui (60) de l'élément longitudinal (56), correspondant à une possible rupture du câble (40) du contrepoids (52).

4. Dispositif tendeur (4) selon la revendication 1, 2 ou 3, dans lequel le capteur de position (76) identifie un point intermédiaire (80, 84) entre les butées, de manière à signaler à l'avance un éventuel allongement anormal du câble électrique (8).

5. Dispositif tendeur (4) selon l'une quelconque des revendications précédentes, dans lequel ledit dispositif (4) comprend au moins une sonde de température pour mesurer la température du câble électrique (8).

6. Dispositif tendeur (4) selon l'une quelconque des revendications précédentes, comprenant au moins un module de commande (92) du dispositif (4), ledit module de commande (92) étant en interaction avec lesdits capteurs de position (76) de manière à traiter les données et à envoyer rapidement les signaux d'alarme.

7. Dispositif tendeur (4) selon les revendications 5 et 6, dans lequel ledit module de commande (92) traite les signaux provenant du capteur de position (76) comme fonction de l'allongement thermique possible du câble électrique (8) par rapport à sa valeur nominale.

8. Dispositif tendeur (4) selon l'une quelconque des revendications précédentes, dans lequel l'élément longitudinal (56) est creux afin de pouvoir contenir, de manière télescopique, et de guider ladite tige d'appui (60) parallèlement à ladite direction principale (X-X) et dans lequel le dispositif (4) comprend un bloc de sécurité télescopique (5) capable de former un blocage ou une butée à la sortie de la tige d'appui (60) de l'élément longitudinal correspondant (56).

9. Dispositif tendeur (4) selon la revendication 8, dans lequel le bloc de sécurité télescopique (5) comprend un épaulement (6) solidaire de la tige d'appui (60) et capable de former une encoche en rapport avec un taquet correspondant (7) réalisé dans ledit élément longitudinal (56).

10. Dispositif tendeur (4) selon la revendication 9, dans lequel l'épaulement (6) est situé à une extrémité d'entrée (9) de la tige d'appui (60), face à la poulie fixe (20) alors que le taquet (7) est situé près d'une extrémité de sortie (10) de l'élément longitudinal (56), face à la poulie mobile (24).

11. Dispositif tendeur (4) selon l'une quelconque des revendications précédentes, dans lequel ledit ancrage (32) pour le câble électrique (8) est réalisé directement sur le chariot mobile (28) à une extrémité axiale (36) opposée à ladite poulie fixe (20), en rapport avec la direction principale (X-X).

12. Dispositif tendeur (4) selon l'une quelconque des revendications précédentes, dans lequel l'élément longitudinal (56) est fixé à la traverse (12) au niveau des moyens de liaison (16) avec la structure porteuse associable et la tige d'appui (60) est fixée au chariot mobile (28) au point d'ancrage (32) du câble électrique (8).

13. Dispositif tendeur (4) selon l'une quelconque des revendications précédentes, comprenant une paire d'éléments longitudinaux (56) et une paire de tiges d'appui (60), positionnées sur les côtés opposés des poulies (20, 24), dans une direction transversale parallèle aux axes de rotation (Y-Y, Z-Z) desdites poulies (20, 24), chaque élément longitudinal (56) contenant et guidant une tige d'appui (60) correspondante.

14. Dispositif tendeur (4) selon l'une quelconque des revendications précédentes, dans lequel le dispositif (4) comprend au moins deux poulies fixes (20), fixées à la traverse (12) et alignées dans la direction principale (X-X), et au moins deux poulies mobiles (24), fixées au même chariot mobile (28) et alignées dans la direction principale (X-X), les poulies fixes (20) et mobiles (24) fonctionnant de manière solidaire pour multiplier la traction du contrepoids (52).

15. Dispositif tendeur (4) selon l'une quelconque des revendications précédentes, dans lequel l'élément longitudinal (56) définit un logement (64) contenant un câble (68) fournissant de l'énergie au dispositif de commande (72) du fonctionnement du dispositif télescopique (4).
